(19) Europäisches Patentamt

European Patent Office

Office européen des brevets

(11) **EP 1 270 176 B1**

(12) **EUROPÄISCHE PATENTSCHRIFT**

(45) Veröffentlichungstag und Bekanntmachung des Hinweises auf die Patenterteilung:
**17.03.2004 Patentblatt 2004/12**

(51) Int Cl.⁷: **B29C 47/20**, B29D 24/00, B29C 47/06, E04C 2/54

(21) Anmeldenummer: **02010892.4**

(22) Anmeldetag: **16.05.2002**

(54) **Extrusionswerkzeug zur Herstellung von Hohlkammerprofilplatten aus thermoplastischem Kunststoff mit innen liegender coextrudierter Schicht**

Extrusion die for manufacturing sheets from thermoplastic material with internal hollow chambers having an inner coextruded layer

Filière d'extrusion pour la fabrication de plaques d'un matériau thermoplastique avec des cavités internes et ayant une couche intérieure coextrudée

(84) Benannte Vertragsstaaten:
**AT BE CH CY DE DK ES FI FR GB GR IE IT LI LU MC NL PT SE TR**

(30) Priorität: **22.06.2001 DE 10129702**

(43) Veröffentlichungstag der Anmeldung:
**02.01.2003 Patentblatt 2003/01**

(73) Patentinhaber: **Röhm GmbH & Co. KG**
**64293 Darmstadt (DE)**

(72) Erfinder:
• **Mende, Volker**
  **64297 Darmstadt (DE)**
• **Scharnke, Wolfgang**
  **64283 Darmstadt (DE)**

(56) Entgegenhaltungen:
**EP-A- 0 548 822     EP-A- 0 716 197**
**EP-A- 0 733 754     EP-A- 0 874 095**
**US-A- 4 113 411     US-A- 4 569 875**

## Beschreibung

Die Erfindung betrifft ein Extrusionswerkzeug zur Herstellung von Hohlkammerprofilplatten aus thermoplastischem Kunststoff mit innen liegender coextrudierter Schicht.

Stand der Technik

DE 25 44 245 beschreibt die Verwendung von Scheiben aus Polymethylmethacrylat mit einem Gehalt an lichtreflektierenden parallel zur Oberfläche ausgerichteten Teilchen. Die verwendeten Pigmentteilchen bewirken dabei eine selektive Reflektion im Infrarot-Bereich, die sich durch eine Selektivitätskennzahl von größer 1 charakterisieren läßt. Als IR-reflektierende Pigmente werden $TiO_2$, Bleicarbonat und Wismutoxychlorid genannt. Die Verwendung von $TiO_2$-Pigment vom Anatas-Typ, das in einer Schichtdicke von ca. 120 μm auf Glimmer-Plättchen niedergeschlagen ist, wird als besonders vorteilhaft hervorgehoben.

Die Teilchen werden in Konzentrationen von 0,01 bis 1 Gew.-% in einem teilweise polymerisierten Methymethacrylat dispergiert. Die Suspension wird anschließend in einer Kammer zwischen Glasplatten zu Polymethylmethacrylat auspolymerisiert. Lagert man die Kammer dabei waagerecht, können sich die enthaltenen Pigment-Glimmer-Teilchen beim Absinken verstärkt parallel zur Scheibenoberfläche ausrichten, so daß der gewünschte IR-reflektierende Effekt in den auspolymerisierten Scheiben auftritt. Diese Parallelausrichtung der IR-reflektierenden Teilchen kann nochmals verbessert werden, wenn die Glasplatten der Kammer zusätzlich einige Male zueinander kreisend bewegt werden, während sich das polymerisierende Material noch im Gelzustand befindet.

DE 25 44 245 erwähnt weiterhin die Möglichkeit die IR-reflektierenden Pigmente auch in Formmassen einzuarbeiten. Die Pigment sollen sich dann bei der Verarbeitung durch Kalandrieren, Extrudieren oder Spritzgießen weitgehend oberflächenparallel ausrichten.

EP-A 0 548 822 beschreibt lichtdurchlässige, IR-reflektierende Körper mit Sonnenschutz- und Wärmedämmwirkung, wie Platten, Stegplatten oder Lichtkuppeln, mit einer Transmission im sichtbaren Bereich (T) von 45 bis 75 %, einer Gesamtstrahlungsdurchlässigkeit (g) von 30 bis 60 % und einem Verhältnis T/g > 1,15 (nach DIN 67 507), die sich aus einem ein steifen, amorphen Basismaterial aus lichtdurchlässigem Kunststoff und einem lichtdurchlässigen Überzugsmaterial mit einem Gehalt von 20 bis 40 Gew.-% an rot- und IR-reflektierenden Teilchen, die aus einer 60 bis 120 nm dicken Schicht von Titandioxid auf einem blättchenförmigen Trägerpigment bestehen, durch Coextrusion oder Beschichtungen wie Lackieren oder durch Reverse-Roll-Coating herstellen lassen. Die IR-reflektierenden Teilchen sind dabei in einer 5 bis 40 Mikrometer dicken, an dem Basismaterial haftenden Überzugsschicht aus einem transparenten, wasserunlöslichen Bindemittel enthalten und parallel zur Oberfläche ausgerichtet. In den Beispielen werden $TiO_2$-Pigmente vom Rutil-Typ eingesetzt. Für die Coextrusion wird empfohlen, ein Bindemittel für die IR-reflektierende Schicht mit einer niedrigeren Schmelzviskosität als der des Basismaterials zu wählen.

Handelsüblich sind z.B. Stegmehrfachplatten aus Polymethylmethacrylat mit coextrudierter IR-reflektierender Ausrüstung gemäß EP-A 0 548 822. Ebenso sind Stegmehrfachplatten aus Polycarbonat mit entsprechender IR-reflektierender Ausrüstung bekannt, wobei sich zum Zweck verbesserter Witterungsbeständigkeit auf der coextrudierten Pigmentschicht noch eine weitere coextrudierte Schicht enthaltend UV-Absorber befindet.

DE 196 18 569 A1 beschreibt ein mehrschichtige Interferenzpigmente, bestehend aus einem transparenten Trägermaterialien, die mit alternierenden Schichten von Metalloxiden mit niedriger und hoher Brechzahl beschichtet sind, wobei die Differenz der Brechzahl mindestens 0,1 beträgt. Auf diese Weise können z. B. Glimmerplättchen mit einer alternierenden Schicht aus $TiO_2$/$SiO_2$/$TiO_2$ versehen sein. Pigment wie sie in der DE 196 18 569 A1 beschrieben werden, eigenen sich zur Pigmentierung von Agrarfolien, um die Infrarotstrahlung der Sonne fern zu halten und so eine übermäßige Erwärmung, z. B. von Gewächshäusern, zu verhindern.

EP-A 0 733 754 beschreibt Stegmehrfachplatten aus einem schlagzäh modifizierten Polymethylmethacrylat. Weiterhin wird erwähnt, daß es möglich ist, die erfindungsgemäßen Stegmehrfachplatten zusätzlich an der Außen- oder Innenseite mit funktionellen Schichten, wie Kratzfest-, Antireflex-, wasserspreitenden oder auch IR-reflektierenden Beschichtungen auszurüsten. EP 0 657 280 beschreibt ein Verfahren zur Herstellung von Platten aus Polycarbonat mit mehreren coextrudierten Schichten, die Perlglanzpigmente und/oder UV-Absorber enthalten können.

EP 0 774 551 A1 Stegplatten aus Kunststoff, insbesondere Polycarbonat, die in dünnen coextrudierten Schichten z. B. IR-reflektierende Metalloxidpigmente und UV-Absorber enthalten können.

US 4,569,875 beschreibt Hohlkammerprofilplatten aus Acrylglas mit einer im Innern des Hohlkammerprofils mindestens einseitig oben oder unten, zumindest teilweise offen liegenden durchgehenden Schicht aus einem schlagzähen Kunststoff, z. B. Polycarbonat oder einem Acrylglas mit höherer Schlagzähigkeit.

DE 197 29 093 C2 beschreibt ein Verfahren und ein Werkzeug zur Herstellung von Stegplatten mit einer durch Coextrusion aufgetragenen streifenweisen Beschichtung, z. B. mit einer Coextrusionsmasse enthaltend IR-reflektierende Pigmente. Es wird erwähnt, daß die Beschichtung sowohl außen als auch auf der Innenseite der Kammer aufgetragen werden kann. Das gezeigte Werkzeug ist jedoch lediglich für eine Außenbeschichtung geeignet. Dabei wird die Coextrusionsschicht in Streifen über mehrere Kanäle im Austrittsbereich der Profildüse auf die Basisformmasse aufgesetzt. Es bleibt offen wie eine entsprechende Innenbeschichtung zu realisieren wäre.

Aufgabe und Lösung

Es wurde als Aufgabe gesehen, ein Werkzeug bereitzustellen, mit dem Hohlkammerprofilplatten aus thermoplastischem Kunststoff mit einem Schichtaufbau aus einer oben und unten befindlichen Schicht aus einer Kunststoffschmelze und einer im Innern des Hohlkammerprofils liegenden Schicht aus einer anderen Kunststoffschmelze hergestellt werden können. Da nur zwei Kunststoffschmelzen benötigt werden, sollte es vermieden werden dabei mehr als zwei Extruder einzusetzen, um die Handhabung im Extrusionsverfahren einfach zu halten, so daß ansonsten zwangsläufig auftretende Anfahr-, Regel und Dosierprobleme gering gehalten werden.

Die Aufgabe wird gemäß Anspruch 1 gelöst durch ein Extrusionswerkzeug zur Extrusion von Hohlkammerprofilplatten aus thermoplastischem Kunststoff mit einem Schichtaufbau aus einer oben und unten befindlichen Schicht (40) aus einer Kunststoffschmelze (4) und einer im Innern des Hohlkammerprofils einseitig oben oder unten, zumindest teilweise offen liegenden, durchgehenden Schicht (50) aus einer anderen Kunststoffschmelze (5) auf dem Wege der Coextrusion, wobei das Extrusionswerkzeug ein Verteilerwerkzeug (1), eine Profildüse (9) und mindestens drei Schmelzestromkanäle (2a, 2b, 3) aufweist, bei denen die Kunststoffschmelze (4) den Schmelzestromkanälen (2a) und (2b) zugeordnet wird und die Kunststoffschmelze (5) dem Schmelzestromkanal (3) zugeordnet wird,
wobei der Schmelzestromkanal (2a) den Schmelzestromkanal (2b) oder das Verteilerwerkzeug (1) mittels einer Verzweigung (20a) umgeht und nach der Verzweigung wieder zusammengeführt wird,
vor oder im Bereich der Verzweigung (20a) durch Einmündung des Schmelzestromkanals (3) in den Schmelzestromkanal (2b) die Kunststoffschmelze (5) auf die Kunststoffschmelze (4) aufgesetzt wird und die Verteilung der aufgesetzten Kunststoffschmelze (5) mittels des Verteilerwerkzeugs (1) geregelt werden kann,
der Schmelzestromkanal (2b) mit der Kunststoffschmelze (4) und der aufgesetzten Kunststoffschmelze (5) anschließend in der Profildüse (9) mit dem Schmelzestromkanal (2a) zusammengeführt wird, wobei die Kunststoffschmelze (4) aus dem Schmelzestromkanal (2a) auf die Kunststoffschmelze (5) aus dem Schmelzestromkanal (2b) aufgesetzt wird, so daß sich diese zwischen zwei Schichten der Schmelze (4) befindet und die vereinigten Kunststoffschmelzen während des Austritts aus der Profildüse (9) zu einer Hohlkammerprofilplatte geformt werden.

Das erfindungsgemäße Werkzeug bietet den Vorteil, das die Herstellung einer Hohlkammerprofilplatten aus thermoplastischem Kunststoff mit dem erwähnten Schichtaufbau mit durchgehender innen liegender Mittelschicht unter Einsatz von nur zwei Schmelzeströmen ermöglicht wird.

Die Erfindung betrifft weiterhin ein Verfahren zur Herstellung von mehrschichtigen Hohlkammerprofilplatten aus thermoplastischem Kunststoff mit einem Schichtaufbau aus einer oben und unten befindlichen Schicht (40) aus einer Kunststoffschmelze (4) und einer im Innern des Hohlkammerprofils einseitig oben oder unten, zumindest teilweise offen liegenden, durchgehenden Schicht (50) aus einer anderen Kunststoffschmelze (5) auf dem Wege der Coextrusion unter Verwendung des erfindungsgemäßen Extrusionswerkzeugs.

Das Verfahren bietet den Vorteil, daß trotz dreischichtigen Aufbaus der hergestellten Hohlkammerprofilplatte, nur zwei Schmelzeströme zu regeln sind. Das Verfahren ist daher einfacher beherrschbar als ein Verfahren bei dem drei Schmelzeströme aus drei Extrudern gespeist werden müssen.

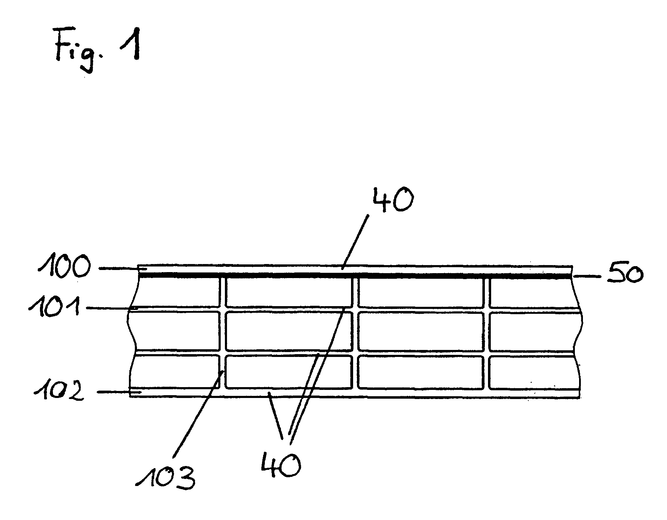

Die Erfindung betrifft weiterhin eine Hohlkammerprofilplatte, die nach dem erfindungsgemäßen Verfahren herstellbar ist und aus thermoplastischem Kunststoff mit einem Schichtaufbau aus einer oben und unten befindlichen Schicht (40) aus einer Kunststoffschmelze (4) und einer im Innern des Hohlkammerprofils einseitig oben oder unten, zumindest teilweise offen liegenden, durchgehenden Schicht (50) aus einer anderen Kunststoffschmelze (5) besteht, wobei die durchgehende Schicht aus einem thermoplastischen Kunststoff besteht, der ein anorganisches und/oder ein organisches Pigment, einen Farbstoff, ein Perlglanzpigment und/oder ein Schlagzähmodifizierungsmittel und/oder Lichtstreuperlen und/oder ein Lichtstreumittel enthält (s. Fig. 1).

Die erfindungsgemäße Hohlkammerprofilplatte bietet den Vorteil, daß eine funktionelle Schicht im Innern des Hohlkammerprofils, z. B. eine IR-reflektierende Schicht, gegenüber der Witterung und mechanischen Einflüssen durch die darüberliegende Schicht geschützt wird. Gegenüber dem in DE 197 29 093 C2 beschriebenen Hohlkörper besteht weiterhin der Vorteil, daß eine bessere funktionelle Wirkung erhalten wird, da die Schicht anstatt nur in Streifen vorhanden durchgehend ist.

Bezugszeichenliste:

Fig. 1: Beispiel einer Stegvierfachplatte

(40) = Schicht aus der Kunststoffschmelze (4)
(50) = Schicht aus der Kunststoffschmelze (5)
(100) = Oberer Gurt

(101) = Zwischengurte
(102) = Unterer Gurt
(103) = Stege

Figuren 2a, b und 3 a, b:

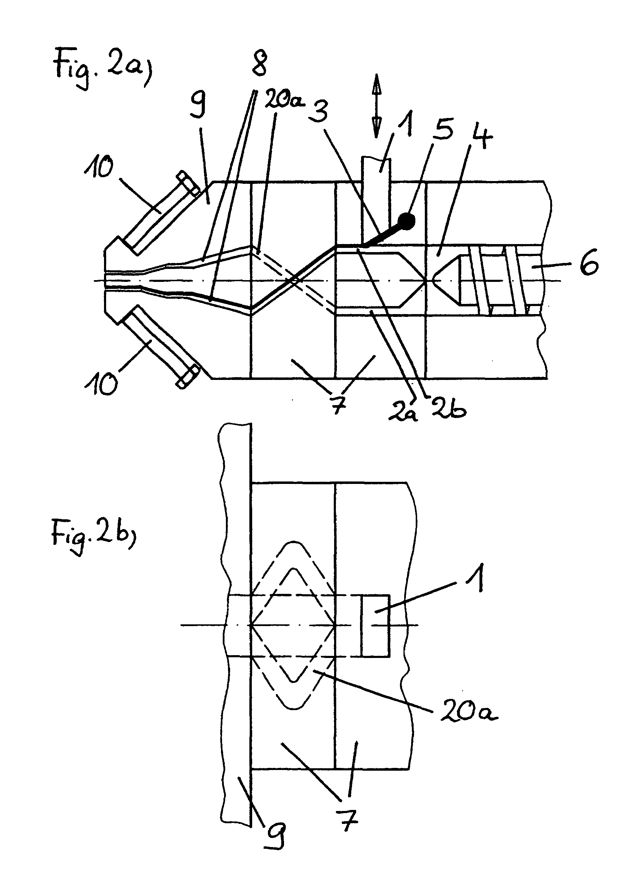

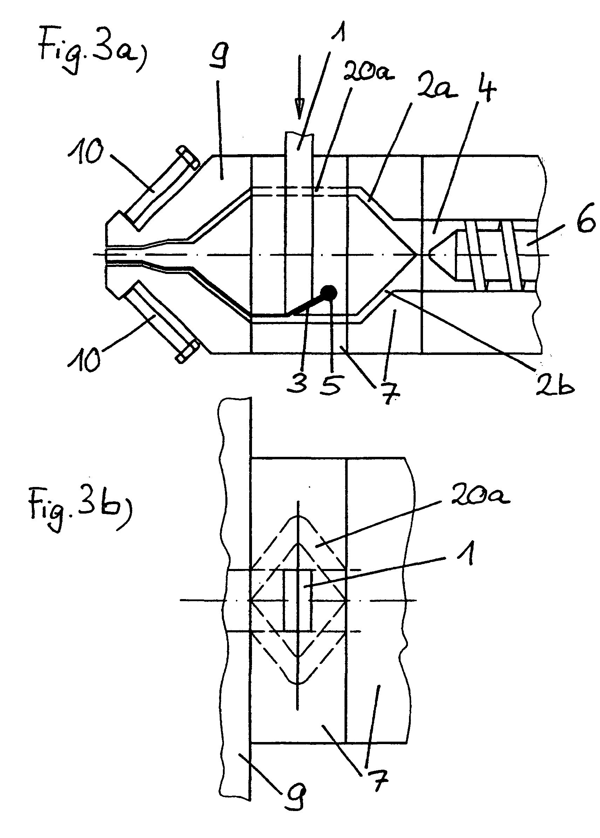

Die Figuren 2a bzw. 3a zeigen ein erfindungsgemäßes Extrusionswerkzeug im Querschnitt. Die Figuren 2b bzw. 3b zeigen ausschnittsweise jeweils den Bereich um die Verzweigung (20a) in der Draufsicht

(1) = Verteilerwerkzeug
(2a) = Schmelzestromkanal 2a
(2b) = Schmelzestromkanal 2b
(3) = Schmelzestromkanal 3
(4) = Kunststoffschmelze (4)
(5) = Kunststoffschmelze (5)
(6) = Extruderschnecke
(7) = Austauschbarer Adapter (hier zweiteilig)
(8) = Verteilerkanal
(9) = Profildüse
(10) = Stellmittel
(20a) = Verzweigung (20a)

**Ausführung der Erfindung**

Das Extrusionswerkzeug

Die Erfindung betrifft ein Extrusionswerkzeug zur Extrusion von Hohlkammerprofilplatten aus thermoplastischem Kunststoff mit einem Schichtaufbau aus einer oben und unten befindlichen Schicht (40) aus einer Kunststoffschmelze (4) und einer im Innern des Hohlkammerprofils einseitig oben oder unten, zumindest teilweise offen liegenden, durchgehenden Schicht (50) aus einer anderen Kunststoffschmelze (5) auf dem Wege der Coextrusion, wobei das Extrusionswerkzeug ein Verteilerwerkzeug (1), eine Profildüse (9) und mindestens drei Schmelzestromkanäle (2a, 2b, 3) aufweist, bei denen die Kunststoffschmelze (4) den Schmelzestromkanälen (2a) und (2b) zugeordnet wird und die Kunststoffschmelze (5) dem Schmelzestromkanal (3) zugeordnet wird, wobei der Schmelzestromkanal (2a) den Schmelzestromkanal (2b) oder das Verteilerwerkzeug (1) mittels einer Verzweigung (20a) umgeht und nach der Verzweigung wieder zusammengeführt wird, vor oder im Bereich der Verzweigung (20a) durch Einmündung des Schmelzestromkanals (3) in den Schmelzestromkanal (2b) die Kunststoffschmelze (5) auf die Kunststoffschmelze (4) aufgesetzt wird und die Verteilung der aufgesetzten Kunststoffschmelze (5) mittels des Verteilerwerkzeugs (1) geregelt werden kann, der Schmelzestromkanal (2b) mit der Kunststoffschmelze (4) und der aufgesetzten Kunststoffschmelze (5) anschließend in der Profildüse (9) mit dem Schmelzestromkanal (2a) zusammengeführt wird, wobei die Kunststoffschmelze (4) aus dem Schmelzestromkanal (2a) auf die Kunststoffschmelze (5) aus dem Schmelzestromkanal (2b) aufgesetzt wird, so daß sich diese zwischen zwei Schichten der Schmelze (4) befindet und die vereinigten Kunststoffschmelzen während des Austritts aus der Profildüse (9) zu einer Hohlkammerprofilplatte geformt werden.

Ein besonders wichtiger Aspekt des Werkzeugs ist die Verzweigung (20a). Der Schmelzestromkanal (2a) kann den Schmelzestromkanal (2b) oder das Verteilerwerkzeug (1) mittels einer Verzweigung (20a) umgehen und wird nach der Verzweigung wieder zusammengeführt wird,

Diese ermöglicht zwei besonders bevorzugte Ausführungsformen (s. **Fig. 2a, 2b, und Fig. 3a, 3b).**

Ausführungsform gemäß Fig. 2a, 2b:

Eine bevorzugte Ausführungsform des Extrusionswerkzeug ist dadurch gekennzeichnet, daß der Schmelzestromkanal (2b) zwischen den Schmelzestromkanälen (3) und (2a) angeordnet ist, der Schmelzestromkanal (3) vor der Verzweigung (20a) in Schmelzestromkanal (2b) mündet, wobei die Kunststoffschmelze (5) auf die Kunststoffschmelze (4) aufgesetzt wird und an dieser Stelle die Verteilung der aufgesetzten Kunststoffschmelze (5) mittels des ebenfalls an dieser Stelle einmündenden Verteilerwerkzeugs (1) erfolgen kann, der Schmelzestromkanal (2a) den Schmelzestromkanal (2b) mittels der Verzweigung (20a) umgeht, der Schmelzestromkanal (2b) mit der Kunststoffschmelze (5) und der aufgesetzten Kunststoffschmelze (4) durch die Verzeigung (20a) hindurch geführt und anschließend die Schmelzestromkanäle (2a) und (2b) in der Profildüse (9) zusammengeführt werden, so daß die Kunststoffschmelze (4) aus dem Schmelzestromkanal (2a) auf die Kunststoffschmelze (5) aus dem Schmelzestromkanal (2b) zusammengeführt wird.

Bei der in **Fig. 2a, 2b** gezeigten Ausführungsform liegt der Schmelzestromkanal (3) oberhalb des Schmelzestromkanals (2b), der in diesem Bereich wiederum über dem Schmelzestromkanal (2a) liegt. Der Schmelzestromkanal (2b) ist daher zwischen den Schmelzestromkanälen (3) und (2a) angeordnet.

Die Kunststoffschmelze (4) wird dabei von einem Hauptextruder in die Schmelzestromkanäle (2a) und (2b) gespeist. Bevorzugt speist ein kleinerer Nebenextruder die Kunststoffschmelze (5) von der Seite oder von oben über eine Einspeisung (5a) in den Schmelzestromkanal (3) ein.

Der Schmelzestromkanal (3) mündet vor der Verzweigung (20a) in Schmelzestromkanal (2b), wobei die Kunststoffschmelze (5) auf die Kunststoffschmelze (4) aufgesetzt wird. An dieser Stelle wird die Verteilung der aufgesetzten Kunststoffschmelze (5) mittels des Verteilerwerkzeugs (1) geregelt. Der Schmelzestromkanal (2a) umgeht den Schmelzestromkanal (2b) mittels der Verzweigung (20a) und wird dabei nach oben geführt. Der Schmelzestromkanal (2b) mit der Kunststoffschmelze (4) und der aufgesetzten Kunststoffschmelze (5) wird durch die Verzeigung (20a) hindurch nach unten geführt. In der Profildüse (9) werden die Schmelzestromkanäle (2a) und (2b) zusammengeführt. Die Kunststoffschmelze (4) aus dem Schmelzestromkanal (2a) kommt dabei mit Kunststoffschmelze (5) aus dem Schmelzestromkanal (2a) zusammen. Man erhält den gewünschten Schichtaufbau..

Es versteht sich, daß das Extrusionswerkzeug gemäß **Fig. 2a, 2b** auch anders, z. B. umgekehrt angeordnet werden kann, so daß sich z. B. die Verhältnisse von Oben zu Unten verkehren können.

Ausführungsform gemäß Fig. 3a, 3b:

Eine weitere bevorzugte Ausführungsform des Extrusionswerkzeug ist dadurch Extrusionswerkzeug nach Anspruch 1, dadurch gekennzeichnet, daß der Schmelzestromkanal (3) zwischen den Schmelzestromkanälen (2a) und (2b) angeordnet ist, der Schmelzestromkanal (3) im Bereich der Verzweigung (20a) in Schmelzestromkanal (2b) mündet, wobei die Kunststoffschmelze (5) auf die Kunststoffschmelze (4) aufgesetzt wird und an dieser Stelle die Verteilung der aufgesetzten Kunststoffschmelze (5) mittels des ebenfalls an dieser Stelle einmündenden Verteilerwerkzeugs (1) erfolgen kann, der Schmelzestromkanal (2a) das Verteilerwerkzeugs (1) mittels der Verzweigung (20a) umgeht, der Schmelzestromkanal (2b) mit der Kunststoffschmelze (4) und der aufgesetzten Kunststoffschmelze (5) und der Schmelzestromkanäle mit der Schmelze (4) in der Profildüse (9) zusammengeführt werden, so daß die Kunststoffschmelze (4) aus dem Schmelzestromkanal (2a) auf die Kunststoffschmelze (5) aus dem Schmelzestromkanal (2b) zusammengeführt wird.

Bei der in **Fig. 3a, 3b** gezeigten Ausführungsform liegt der Schmelzestromkanal (2a) oberhalb des Schmelzestromkanals (3), der in diesem Bereich wiederum über dem Schmelzestromkanal (2b) liegt. Der Schmelzestromkanal (3) ist daher zwischen den Schmelzestromkanälen (2a) und (2b) angeordnet.

Die Kunststoffschmelze (4) wird dabei von einem Hauptextruder in die Schmelzestromkanäle (2a) und (2b) gespeist. Bevorzugt speist ein kleinerer Nebenextruder die Kunststoffschmelze (5) von der Seite her über eine Einspeisung (5a) in den Schmelzestromkanal (3) ein.

Der Schmelzestromkanal (3) mündet im Bereich der Verzweigung (20a) bzw. unterhalb der Verzweigung (20a) in Schmelzestromkanal (2b), wobei die Kunststoffschmelze (5) auf die Kunststoffschmelze (4) aufgesetzt wird. An dieser Stelle wird die Verteilung der aufgesetzten Kunststoffschmelze (5) mittels des Verteilerwerkzeugs (1) geregelt. Der oben liegende Schmelzestromkanal (2a) umgeht dabei das Verteilerwerkzeug (1) mittels der Verzweigung (20a). In der Profildüse (9) werden die Schmelzestromkanäle (2a) und (2b) zusammengeführt. Die Kunststoffschmelze (4) aus dem Schmelzestromkanal (2a) kommt dabei mit Kunststoffschmelze (5) aus dem Schmelzestromkanal (2a) zusammen. Man erhält den gewünschten Schichtaufbau..

Es versteht sich, daß das Extrusionswerkzeug gemäß **Fig. 3a, 3b** auch anders, z. B. umgekehrt angeordnet werden kann, so daß sich z. B. die Verhältnisse von Oben zu Unten verkehren können.

Die vereinigten Schmelzeströme werden durch einen Verteilerkanal (8) verteilt und beim Austritt durch eine formgebende Profildüse (9) zu einem Hohlkammerprofil mit dem entsprechenden Schichtaufbau geformt.

Verteilerwerkzeug (1)

Das erfindungsgemäße Extrusionswerkzeug umfaßt ein Verteilerwerkzeug (1), das bevorzugt ein verstellbarer Schieberadapter oder besonders bevorzugt ein Lamellenadapter sein kann.

Verstellbare Adapter sind bekannt aus (DE-OS 37 41 793). Es handelt sich dabei um austauschbare ein- oder mehrteilige Schieber, deren Profil zuvor dem gewünschten Verteilungsprofil angepaßt wurde.

Lamellenadapter sind bekannt (EP 0 418 681 A2). Hier kann das Extrusionsprofil in der Breite durch eine Vielzahl von Stellgliedem, sogenannte Lamellen beeinflußt werden. Die Regelung kann über eine Regelkreis erfolgen, der anhand am Extrusionsprodukt gemessener Schichtdicken und Auflagenbreiten, die Stellung der Lamellen als auch den Durchsatz des Extruders regelt.

Die Anpassung der Verteilung mittels Verteilerwerkzeugs erfolgt durch auf der Oberseite des Extrusionswerkzeugs zugängliche Stellelemente (10), die Bestandteil des Verteilerwerkzeugs (1) sind. Dabei kann es sich um z. B. um Bolzen, Dehnbolzen oder Piezotranslatoren handeln (s. z. B. EP 0 418 681 A2).

Die Profildüse (9)

Die Profildüse (9) bewirkt durch ihre geometrische Auslegung, die Profilierung der Schmelzen zu einer Hohlkammerprofilplatte, bevorzugt einer Stegplatte mit einem oberen, einem unteren Gurt, gegebenenfalls Zwischengurten (bei Stegmehrfachplatten oder Fachwerkplatten) und dazwischenliegenden senkrecht oder schräg angeordneten Stegen. Die Hohlkammerplatte hat insbesondere die außen im wesentlichen rechteckige Geometrie einer Stegdoppelplatte, einer Stegmehrfachplatte oder einer Fachwerkplatte. **Fig. 1** zeigt eine Stegvierfachplatte mit einem oberem (100), einem unteren Gurt (102), zwei Zwischengurten (101) und senkrechten Stegen (103).

Die Profildüse enthält Verteilerkanäle (8), die die Schmelzen zunächst in der Breite verteilen. Die Verteilerkanäle haben in der Obenaufsicht meist eine kleiderbügelartige Gestalt. Die Geometrie ist dabei in an sich bekannter Weise so angepaßt, daß bereits ohne Beeinflussung durch das Verteilerwerkzeug (1), eine relativ gleichmäßige Verteilung der Schmelzeschichten in der Breite resultiert.

Im Austrittsbereich der Profildüse (9) werden die Schmelzekanäle (2a) und (2b) vereint. Die Profildüse (9) besitzt im Austrittsbereich das entsprechende Gegenprofil zu der herzustellenden Hohlkammerprofilplatte. Meist sind zur Feineinstellung der Profildüse (9) entsprechende Stellmittel (10) für die Düsenlippen im Austrittsbereich vorhanden.

## Austauschbare Adapter (7)

Das Extrusionswerkzeug kann bevorzugt mehrteilig ausgeführt sein, wobei sich der Abschnitt in dem der Schmelzestromkanal (2a) den Schmelzestromkanal (2b) oder das optional vorhandene Verteilerwerkzeug (1) mittels einer Verzweigung (20a) umgeht und nach der Verzweigung wieder zusammengeführt wird in einem ein- oder mehrteiligen, austauschbaren Adapter (7) befindet. Die hat den Vorteil, daß Teile von bereits vorhandenen Extrusionswerkzeugen, wie eine Profildüse und/oder ein Verbindungsstück zum Extruder mit diesem oder diesen Adaptern (7) kombiniert werden können.

## Verfahren

Die Erfindung betrifft weiterhin ein Verfahren zur Herstellung von mehrschichtigen Hohlkammerprofilplatten aus thermoplastischem Kunststoff mit einem Schichtaufbau aus einer oben und unten befindlichen Schicht (40) aus einer Kunststoffschmelze (4) und einer im Innern des Hohlkammerprofils einseitig oben oder unten, zumindest teilweise offen liegenden, durchgehenden Schicht (50) aus einer anderen Kunststoffschmelze (5) auf dem Wege der Coextrusion der Kunststoffschmelzen (4) und (5) unter Verwendung des erfindungsgemäßen Extrusionswerkzeugs und anschließender Kalibrierung des erhaltenen Extrudats.

Hierzu können in an sich bekannter Weise die für den jeweiligen Kunststoff geeigneten Verfahrensbedingungen, Temperaturen und Fördermengen angewendet werden bzw. innerhalb der fachmännischen Routine angepaßt werden. Nach dem Austritt aus der Profildüse (9) wird das Extrudat in üblicher Weise abgekühlt, indem es einer Kalibriereinrichtung, bevorzugt einer Vakuumtrockenkalibrierung, zugeführt wird. Entsprechende Kalibriereinrichtungen sind bekannt z. B. aus DE-C 32 44 953 (= EP-B 0 158 951) oder aus DE 198 04 235 (= EP-A 0 936 052).

Bevorzugt werden Stegplatten mit einem oberen (100), einem unteren Gurt (102), gegebenenfalls Zwischengurten (101) und zwischen den Gurten befindlichen, senkrecht oder schräg angeordneten Stegen (103), insbesondere Stegdoppelplatten, Stegmehrfachplatten oder Fachwerkplatten hergestellt.

## Hohlkammerprofilplatte

Die Erfindung betrifft weiterhin eine Hohlkammerprofilplatte, bevorzugt mit im wesentlichen rechteckigen Querschnitt, die nach dem erfindungsgemäßen Verfahren herstellbar ist, aus thermoplastischem Kunststoff mit einem Schichtaufbau aus einer oben und unten befindlichen Schicht (40) aus einer Kunststoffschmelze (4) und einer im Innern des Hohlkammerprofils einseitig oben oder unten, zumindest teilweise offen liegenden, durchgehenden Schicht (50) aus einer anderen Kunststoffschmelze (5) besteht, wobei die durchgehende Schicht aus einem thermoplastischen Kunststoff besteht, der ein anorganisches und/oder ein organisches Pigment, einen Farbstoff, ein Perlglanzpigment und/oder ein Schlagzähmodifizierungsmittel und/oder Lichtstreuperlen und/oder ein Lichtstreumittel enthält. Die durchgehende Schicht (50) liegt einseitig im Innern des Hohlkammerprofil, also oben oder unten, zumindest teilweise offen, ist dort aber vor mechanischen oder witterungsbedingten Einflüssen besser geschützt als eine entsprechende Schicht, die sich auf der Außenseite der Platte befindet.

Die Hohlkammerprofilplatte ist bevorzugt dadurch gekennzeichnet, daß es sich um einem oberen, einem unteren Gurt, gegebenenfalls Zwischengurten (bei Stegmehrfachplatten oder Fachwerkplatten) und dazwischenliegenden senkrecht oder schräg angeordneten Stegen. Die Hohlkammerplatte hat insbesondere die außen im wesentlichen rechteckige Geometrie einer Stegdoppelplatte, einer Stegmehrfachplatte oder einer Fachwerkplatte.

**Fig. 1** zeigt eine Stegvierfachplatte mit einem oberem (100), einem unteren Gurt (102), zwei Zwischengurten (101) und senkrechten Stegen (103).

Die Hohlkammerprofilplatte ist bevorzugt dadurch gekennzeichnet, daß die Gurte und die dazwischenliegenden Stege im wesentlichen aus dem Kunststoff der Kunststoffschmelze (4) bestehen und einseitig eine auf den Stegen aufsitzende, durchgehende Gurtinnenschicht aus dem Kunststoff der Kunststoffschmelze (5) vorhanden ist.

Hohlkammerprofilplatte ist bevorzugt dadurch gekennzeichnet, daß die Gurte (100, 102) eine Stärke von 0,5 bis 4 mm aufweisen und die durchgehende Gurtinnenschicht eine Stärke von 10 bis 250 µm aufweist und die Gesamtstärke der Stegplatte zwischen 8 und 40 mm beträgt.

Die Hohlkammerprofilplatte ist dadurch gekennzeichnet, daß die durchgehende Gurtinnenschicht aus thermoplastischen Kunststoff besteht, der ein anorganisches oder ein organisches Pigment, einen Farbstoff, ein Perlglanzpigment und/oder ein Schlagzähmodifizierungsmittel und/oder Lichtstreuperlen und/oder ein Lichtstreumittel enthält.

Die Hohlkammerprofilplatte ist bevorzugt dadurch gekennzeichnet, daß sie in der durchgehenden Gurtinnenschicht ein IR-reflektierendes Perlglanzpigment enthält.

Die Transparenz T (tau/d65 nach DIN 67 507) einer solchen Platte liegt bevorzugt zwischen 15 und 75 %. Es können z. B. IR-reflektierendes Perlglanzpigment, bzw. IR-reflektierende Teilchen enthalten sein, bei denen das Trägerpigment, z. B. Glimmer, mit einer 90 bis 150 nm dicken TiO2-Schicht beschichtet ist. Es können z. B. auch IR-reflektierende Teilchen enthalten sein, bei denen das Trägerpigment mit alternierenden Schichten von Metalloxiden beschichtet ist. Geeignet sind auch IR-reflektierende Teilchen, die alternierenden Schichten von Metalloxiden aus $TiO_2$ /$SiO_2$/$TiO_2$ mit einer Summe der Schichtdicken von 150 bis 300 nm bestehen.

IR-reflektierende Perlglanzpigmente

Geeignete IR-reflektierende Pigmente, IR-reflektierende Teilchen aus mit einem Metalloxid beschichteten blättchenförmigen Trägerpigmenten, sind z. B. aus DE 25 44 245 B2, EP-A 548 822, DE 196 18 569 A1 bekannt.

IR-reflektierende Teilchen sind bekannt, z.B. als sogenannte Perlglanzpigmente. Sie sind schicht- bzw. blättchenförmig aufgebaut. In der Regel haben sie einen Durchmesser von 20 bis 100 Mikrometer.

Physikalisch beruht die Infrarotreflexion auf einer doppelten Reflexion des Lichtes an der Ober- und Unterseite der oberflächenparallel ausgerichteten Teilchen. Je nach der Dicke des Teilchens und der Wellenlänge des eingestrahlten Lichtes können sich die an der Oberseite und der Unterseite des Teilchens reflektierten Strahlen durch Interferenz entweder verstärken oder auslöschen. Ein Verstärkung der reflektierten Strahlung tritt ein, wenn

$$d = (2x - 1) \, L_r / 4n$$

ist, wobei d die Dicke des Teilchens, x = 1, $L_r$ die Wellenlänge der reflektierten Strahlung und n der Brechungsindex des Teilchens bei dieser Wellenlänge ist. Dagegen tritt Auslöschung bzw. Abschwächung des reflektierten Lichtes ein, wenn

$$d = (x - 1) \, L_t / 2n$$

ist, wobei hier x = 2 gilt und $L_t$ die Wellenlänge des Lichts ist, das in diesem Falle nicht reflektiert, sondern durchgelassen wird. Aus einer Verbindung der beiden Gleichungen ergibt sich

$$L_r = 2 \, L_t.$$

Daraus folgt, daß bei einer bestimmten Schichtdicke d Licht der Wellenlänge $L_r$ am stärksten reflektiert wird und Licht der halb so großen Wellenlänge $L_t$ am stärksten durchgelassen wird. Die Dicke der Teilchen ist erfindungsgemäß so gewählt, daß das durch das Teilchen hindurchtretende Licht in den sichtbaren Bereich und das von dem Teilchen am stärksten reflektierte Licht in den Infrarotbereich fällt.

Es sind verschiedene Pigmente bekannt, die das angegebene Verhältnis von Dicke und Brechungsindex erfüllen. Dazu gehören Titandioxid, insbesondere vom Anatas-Typ, basisches Bleicarbonat oder Wismutoxychlorid. Besonders vorteilhaft ist Titandioxid vom Rutil-Typ, das auf Glimmerteilchen oder ähnlichen blättchenförmigen Mineralstoffen in definierter Schichtdicke niedergeschlagen wurde. Dieses Pigment ergibt lichtstreuende Beschichtungen, die für alle Arten von Dachverglasungen und Oberlichtern besonders gut geeignet sind. Anders als der Anatas-Typ greift dieses Pigment die Kunststoffmatrix nicht katalytisch an und ermöglich so witterungsbeständige, langlebige Produkte. Besonders geeignet da weniger bruchanfällig bei der Verarbeitung sind größenfraktionierte Produkte, denen die Glimmerteilchen einen mittleren Durchmesser von 10 bis 20 μm aufweisen. Die Messung kann mittels Laserbeugung erfolgen.

Bevorzugt haben mindestens 95, bevorzugt 98 % der Teilchen eine Größe kleiner 25 μm.

Bevorzugt setzt man IR-reflektierende Teilchen ein, bei denen das Trägerpigment, z. B. Glimmer, mit einer 90 bis 150 nm, bevorzugt 100 bis 140 nm dicken $TiO_2$-Schicht beschichtet ist (Als Schichtdicke d gilt dann nur die $TiO_2$-Schicht, nicht die Unterlage aus Glimmer).

Geeignet sind auch IR-reflektierende Teilchen, bei denen das Trägerpigment mit alternierenden Schichten von Metalloxiden beschichtet ist. DE 196 18 569 A1 beschreibt entsprechende mehrschichtige Interferenzpigmente, bestehend aus einem transparenten Trägermaterialien, die mit alternierenden Schichten von Metalloxiden mit niedriger und hoher Brechzahl beschichtet sind, wobei die Differenz der Brechzahl mindestens 0,1 beträgt. Auf diese Weise können z. B. Glimmerplättchen mit einer alternierenden Schicht aus $TiO_2$/$SiO_2$/$TiO_2$ versehen sein, wobei die Summe der Schichtdicken im Bereich von 150 bis 300 nm liegen kann (Geeignet ist z. B. das handelsübliche Perlglanzpigment AC 870, Hersteller Fa. Merck KGaA, Darmstadt, Deutschland)

Bei Hohlkammerprofilplatten aus Polymethylmethacrylat setzt man für die Extrusion der inneren durchgehenden Schicht (50) bevorzugt eine Formmasse aus Polymethylmethacrylat, enthaltend die IR-reflektierenden Teilchen in Granulatform einer Vormischung aus 5 bis 40 Gew.-% IR-reflektierender Teilchen mit einem niedrigviskosen thermoplastischen Polymethylmethacrylat ein. Dadurch kann der Anteil an Bruch gering gehalten werden.

Schlagzähmodifizierungsmittel

Die innen liegende, durchgehende Schicht (50) kann ein Schlagzähmodifizierungsmittel, z. B. für Polyvinylchlorid oder Polymethylmethacrylat enthalten. Besonders bevorzugt besteht die innere durchgehende Schicht aus schlagzähem Polymethylmethacrylat

Schlagzähes Polymethylmethacrylat

Schlagzähmodifiziertes Polymethylmethacrylat ist z. B. aus EP-A 0 733 754 bekannt.

Das schlagzähe Polymethylmethacrylat kann z. B. aufgebaut aus p1) 4 bis 30 Gew.-% einer Elastomerphase aus p2) 70 bis 96 Gew.-% einer thermoplastischen Matrixphase aus Polymethylmethacrylat, das bis zu 20 Gew.-Teilen, bezogen auf 100 Gew.-Teile P, an geeigneten Comonomeranteilen enthalten kann, wobei die Brechungsindices der Elastomerphase E und der Matrixphase M um maximal $n \leq 0{,}02$ voneinander abweichen und wobei die Summe von p1) + p2) 100 Gew.-% ausmacht.

Die Elastomerphase aus vernetzter Polymerphase ist aus 60 bis 99,9 Gew.-Teilen Alkylacrylat und/oder Arylacrylat, aus 0,1 bis 10 Gew.-Teilen geeigneten Vernetzungsmitteln und gegebenenfalls aus 0 bis 30 Gew.-Teilen an geeigneten monofunktionellen ethylenisch ungesättigten Monomeren aufgebaut.

Vorzugsweise werden als Alkylacrylate $C_2$-$C_{10}$-Alkylacrylate eingesetzt, wie beispielsweise Ethylacrylat, Propylacrylat, iso-Propylacrylat, Amylacrylat, Hexylacrylat, Octylacrylat, Decylacrylat, sowie besonders bevorzugt Butylacrylat und 2-Ethylhexylacrylat. Bevorzugte Acrylate sind Phenylacrylat, 2-Phenylethylacrylat, 3-Phenyl-1-propylacrylat, 2-Phenoxyethylacrylat, 2-Phenoxyethoxyethylacrylat, sowie besonders bevorzugt Benzylacrylat. Die Vernetzungsmittel sind im allgemeinen Verbindungen mit mindestens zwei ethylenisch ungesättigten, radikalisch polymerisierbaren Resten. Als Vertreter für Verbindungen mit zwei ethylenisch ungesättigten, radikalisch polymerisierbaren Resten seien beispielhaft genannt: (Meth)acrylester von Diolen, wie beispielsweise Ethylenglykoldi(meth)acrylat oder 1,4-Butandioldi(meth)acrylat, aromatische Verbindungen, wie beispielsweise Divinylbenzol, sowie Verbindungen mit mindestens einer Allylgruppe, wie beispielsweise Allyl(meth)acrylat. Als Vernetzungsmittel mit drei oder mehr ethylenisch ungesättigten, radikalisch polymerisierbaren Resten seien beispielhaft Triallylcyanurat, Trimethylolpropantri(meth)acrylat sowie Pentaerythritetra(meth)acrylat genannt. Weitere Beispiele hierzu werden beispielsweise in US-P 4,513,118 angegeben.

Die gegebenenfalls in 0 bis 30 Gew.-Teilen in der Elastomerphase enthaltenen Comonomeren, dienen vornehmlich der Angleichung des in der Regel niedrigeren Brechungsindex der Elastomerphase an denjenigen der Matrixphase M. Vorzugsweise werden also Comonomere mit vergleichsweise hohen Brechungs-indices gewählt werden, wie beispielsweise radikalisch polymerisierbare aromatische Verbindungen. Beispielhaft seien genannt: Vinyltoluol, Styrol oder -Methylstyrol, die in solchen Mengen verwendet werden, daß sie die Witterungsbeständigkeit des schlagzähen Polymethylmethacrylats nicht beeinträchtigen.

Die mit der Elastomerphase zumindest zu 5 Gew.-% kovalent verbundene Matrixphase M besteht aus einem Polymethylmethacrylat P, das aus 80 bis 100 Gew.-Teilen Methylmethacrylat-Einheiten aufgebaut ist, und weist eine Glasübergangstemperatur von wenigstens 70 °C auf. Weiterhin können im Polymethylmethacrylat 0 bis 20 Gew.-Teile weitere ethylenisch ungesättigte, radikalisch polymerisierbare Comonomereinheiten anwesend sein, vorzugsweise Alkyl(meth)acrylate mit 1 bis 4 Kohlenstoffatomen im Alkylrest. Das mittlere Molekulargewicht $M_w$ des Polymethylmethacrylats beträgt günstigerweise zwischen $10^4$ und $10^6$, vorzugsweise zwischen $3 \times 10^4$ und $5 \times 10^5$ Dalton (zur Bestimmung von $M_w$ vergleiche beispielsweise H.F. Mark et. al., Encyclopedia of Polymer Science and Engineering, 2nd Ed., Vol. 10, Seiten 1ff, J. Wiley, New York, 1989).

Vorzugsweise ist die Elastomerphase Bestandteil zwei- oder mehrstufiger Emulsionspolymerisate die in der äußeren Hülle aus dem die Matrixphase bildenden Polymethylmethacrylate bestehen. Besonders bevorzugt sind Emulsionspolymerisate mit einem wenigstens dreistufigen Aufbau, gebildet aus einem Kern aus Polymethylmethacrylat, einer ersten Schale S1 aus der Elastomerphase und einer zweiten Schale S2 aus Polymethylmethacrylat, wobei sich weitere Schalen entsprechend den Schalen S1 und S2 alternierend anschließen können. Der Anteil der Emulsionspolymerisate am schlagzähen Polymethylmethacrylat beträgt zwischen 5 und 70 Gew.-%, vorzugsweise zwischen 10 und 50 Gew.-%, wobei die restlichen Gewichtsanteile von dem nicht in den Latexteilchen enthaltenen Polymethylmethacrylat-Kunststoff ausgemacht werden. Vorzugsweise wird das schlagzähe Polymethylmethacrylat durch Abmischen des Emulsionspolymerisats mit dem Polymethylmethacrylat hergestellt, wobei beispielsweise die Bestandteile gemischt werden und anschließend die Wasserphase und die Emulgatoren abgetrennt werden oder wobei zunächst das Emulsionspolymerisat aus der wäßrigen Phase isoliert wird und anschließend mit dem, beispielsweise durch kontinuierliche Substanzpolymerisation hergestellten, Polymethylmethacrylat in der Schmelze gemischt wird. Insgesamt sollen die Latexteilchen, die das Emulsionspolymerisat bilden, einen Durchmesser zwischen 0,1 und 3 μm, bevorzugt zwischen 0,15 und 1 μm aufweisen. Prinzipiell ist der Aufbau solcher Latexteilchen und die Isolierung des Emulsions-polymerisats für zweistufige Emulsionspolymerisate beispielsweise in EP-Patent 0 033 999 (= US-Patent 4,543,383) und für dreistufige Emulsionspolymerisate beispielsweise in EP-Patent 0 113 925 (= US-Patent 4,513,118) beschrieben. Bei der wäßrigen Emulsionspolymerisation arbeitet man zweckmäßigerweise im neutralen oder leicht sauren pH-Bereich, wobei der Verwendung langkettiger Alkylsulfate bzw. Alkylsulfonate als Emulgatoren günstig ist. Als Polymerisationsinitiatoren dienen zweckmäßig die einschlägig bekannten Azoverbindungen bzw. organische oder anorganische Peroxide, wie beispielsweise Persulfate, die im allgemeinen in Mengen zwischen 10-3 und 1 Gew.-%, bezogen auf die Monomeren, verwendet werden: Zur Einstellung des zuvor beschriebenen Molekulargewichts $M_w$ des im Emulsionspolymerisat anwesenden Polymethylmethacrylats dienen die einschlägig bekannten Molekulargewichtsregler, wie beispielsweise Merkaptoverbindungen, wie 2-Ethylhexylthioglykolat oder tert.-Dodecylmercaptan.

Besonders bevorzugt sind solche Emulsionspolymerisate, die im einem Extruder coaguliert und entwässert werden. Die Schmelze wird dabei in der Entwässerungszone des Extruders in mehrere Abschnitte unterteilt, die jeweils in voneinander getrennten Schneckengängen gefördert werden. Die Schmelzephase wird dabei in wenigstens einem dieser Schneckengänge im Einzugsspalt der Doppelschnecke unter Bildung eines örtlich eng begrenzten Druckgradienten zu einem zusammenhängenden Schmelzekuchen gestaut. Dabei wird das Wasser vor der Grenze des Schmelzekuchens unter der Wirkung der Schwerkraft derart nach unten durch wenigstens eine Abzugsöffnung abfließen gelassen, daß der Schmelzekuchen nicht mit einer zusammenhängenden Wasserphase in Berührung steht. Dadurch werden die im Wasser enthaltenen Zusatzstoffe und Verunreinigungen effektiv entfernt, so das ein besonders witterungsstabiles nicht zur Vergilbung neigendes Material erhalten wird (s. dazu EP-A 0 683 028 und als zweistufiges Verfahren DE 197 18 597 C1).

Lichtstreuperlen

Die innere durchgehende Schicht (50) kann Lichtstreuperlen in Konzentrationen von 0,1 bis 30 Gew.-%, bevorzugt 0,5 bis 10 Gew.-% enthalten. Lichtstreuperlen sind aus Copolymeren aus Methymethacrylat und Stryrol oder Benzylmethacrylat, die zusätzlich vernetzt sein können, sind bekannt z. B. aus DE 35 28 165 C2, EP 570 782 B1 oder EP 656 548 A2.

Thermoplastische Kunststoffe

Es kommen praktisch alle thermoplastischen Kunststoff in Betracht aus denen Hohlkammerprofilplatte gefertigt werden können. Bevorzugt sind z. B. Acrylnitril/Butadien/Stryrol-Propfcopolymere (ABS), Polyamide, Polyethylentherephthalat, Polybuthylentherephthalat, Polyvinylchlorid, Polystyrol, Polycarbonat und besonders bevorzugt Polymethylmethacrylat.

Geeignet ist z. B. ein Polymethylmethacrylat, das aus 80 bis 100 Gew.-% Methymethacrylat-Einheiten und gegebenenfalls aus 0 bis 20 Gew.-% weiteren copolymerisierbaren Monomeren besteht. Zu nennen sind z. B. Hydroxyethylmethacrylat, Butylacrylat, Ethylacrylat oder bevorzugt Methylacrylat. Das Molekulargewicht Mw (Gewichtsmittel, bestimmt z. B. nach DSC oder durch Gelchromatographie) kann z. B. im Bereich von $5 \times 10^4$ bis $2 \times 10^5$ liegen.

Verwendungen

Die erfindungsgemäßen Hohlkammerprofilplatte können als Bedachungs- oder Fassadenelemente verwendet werden.

**Patentansprüche**

1. Extrusionswerkzeug zur Extrusion von Hohlkammerprofilplatten aus thermoplastischem Kunststoff mit einem Schichtaufbau aus einer oben und unten befindlichen Schicht (40) aus einer Kunststoffschmelze (4) und einer im Innern des Hohlkammerprofils einseitig oben oder unten, zumindest teilweise offen liegenden, durchgehenden Schicht (50) aus einer anderen Kunststoffschmelze (5) auf dem Wege der Coextrusion,
wobei das Extrusionswerkzeug ein Verteilerwerkzeug (1), eine Profildüse (9) und mindestens drei Schmelzestromkanäle (2a, 2b, 3) aufweist, bei denen die Kunststoffschmelze (4) den Schmelzestromkanälen (2a) und (2b) zugeordnet wird und die Kunststoffschmelze (5) dem Schmelzestromkanal (3) zugeordnet wird,
wobei der Schmelzestromkanal (2a) den Schmelzestromkanal (2b) oder das Verteilerwerkzeug (1) mittels einer Verzweigung (20a) umgeht und nach der Verzweigung wieder zusammengeführt wird,
vor oder im Bereich der Verzweigung (20a) durch Einmündung des Schmelzestromkanals (3) in den Schmelzestromkanal (2b) die Kunststoffschmelze (5) auf die Kunststoffschmelze (4) aufgesetzt wird und die Verteilung der aufgesetzten Kunststoffschmelze (5) mittels des Verteilerwerkzeugs (1) geregelt werden kann,
der Schmelzestromkanal (2b) mit der Kunststoffschmelze (4) und der aufgesetzten Kunststoffschmelze (5) anschließend in der Profildüse (9) mit dem Schmelzestromkanal (2a) zusammengeführt wird, wobei die Kunststoffschmelze (4) aus dem Schmelzestromkanal (2a) auf die Kunststoffschmelze (5) aus dem Schmelzestromkanal (2b) aufgesetzt wird, so daß sich diese zwischen zwei Schichten der Schmelze (4) befindet und die vereinigten Kunststoffschmelzen während des Austritts aus der Profildüse (9) zu einer Hohlkammerprofilplatte geformt werden.

2. Extrusionswerkzeug nach Anspruch 1, **dadurch**

**gekennzeichnet, daß** der Schmelzestromkanal (2b) zwischen den Schmelzestromkanälen (3) und (2a) angeordnet ist, der Schmelzestromkanal (3) vor der Verzweigung (20a) in Schmelzestromkanal (2b) mündet, wobei die Kunststoffschmelze (5) auf die Kunststoffschmelze (4) aufgesetzt wird und an dieser Stelle die Verteilung der aufgesetzten Kunststoffschmelze (5) mittels des ebenfalls an dieser Stelle einmündenden Verteilerwerkzeugs (1) erfolgen kann, der Schmelzestromkanal (2a) den Schmelzestromkanal (2b) mittels der Verzweigung (20a) umgeht, der Schmelzestromkanal (2b) mit der Kunststoffschmelze (5) und der aufgesetzten Kunststoffschmelze (4) durch die Verzeigung (20a) hindurch geführt und anschließend die Schmelzestromkanäle (2a) und (2b) in der Profildüse (9) zusammengeführt werden, so daß die Kunststoffschmelze (4) aus dem Schmelzestromkanal (2a) auf die Kunststoffschmelze (5) aus dem Schmelzestromkanal (2b) zusammengeführt wird.

3. Extrusionswerkzeug nach Anspruch 1, **dadurch gekennzeichnet, daß** der Schmelzestromkanal (3) zwischen den Schmelzestromkanälen (2b) und (2a) angeordnet ist, der Schmelzestromkanal (3) im Bereich der Verzweigung (20a) in Schmelzestromkanal (2b) mündet, wobei die Kunststoffschmelze (5) auf die Kunststoffschmelze (4) aufgesetzt wird und an dieser Stelle die Verteilung der aufgesetzten Kunststoffschmelze (5) mittels des ebenfalls an dieser Stelle einmündenden Verteilerwerkzeugs (1) erfolgen kann, der Schmelzestromkanal (2a) das Verteilerwerkzeugs (1) mittels der Verzweigung (20a) umgeht, der Schmelzestromkanal (2b) mit der Kunststoffschmelze (4) und der aufgesetzten Kunststoffschmelze (5) und der Schmelzestromkanäle mit der Schmelze (4) in der Profildüse (9) zusammengeführt werden, so daß die Kunststoffschmelze (4) aus dem Schmelzestromkanal (2a) auf die Kunststoffschmelze (5) aus dem Schmelzestromkanal (2b) zusammengeführt wird.

4. Extrusionswerkzeug nach einem oder mehreren der Ansprüche 1 bis 3, **dadurch gekennzeichnet, daß** es sich bei dem Verteilerwerkzeug (1) um einen verstellbaren bevorzugt mehrteiligen Schieberadapter oder um einen Lamellenadapter handelt.

5. Extrusionswerkzeug nach einem oder mehreren der Ansprüche 1 bis 4, **dadurch gekennzeichnet, daß** die Profildüse (9) im Austrittsbereich das Gegenprofil zu einer Stegplatte mit einem oberen Gurt (100), einem unteren Gurt (102), gegebenenfalls Zwischengurten (101) und zwischen den Gurten befindlichen, senkrecht oder schräg angeordneten Stegen (103), insbesondere das Gegenprofil zu einer Stegdoppelplatte, einer Stegmehrfachplatte oder einer Fachwerkplatte aufweist.

6. Extrusionswerkzeug nach einem oder mehreren der Ansprüche 1 bis 5, **dadurch gekennzeichnet, daß** das Extrusionswerkzeug mehrteilig ist und sich der Abschnitt in dem der Schmelzestromkanal (2a) den Schmelzestromkanal (2b) oder das Verteilerwerkzeug (1) mittels einer Verzweigung (20a) umgeht und nach der Verzweigung wieder zusammengeführt wird in einem ein- oder mehrteiligen, austauschbaren Adapter (7) befindet.

7. Verfahren zur Herstellung von mehrschichtigen Hohlkammerprofilplatten aus thermoplastischem Kunststoff mit einem Schichtaufbau aus einer oben und unten befindlichen Schicht (40) aus einer Kunststoffschmelze (4) und einer im Innern des Hohlkammerprofils einseitig oben oder unten, zumindest teilweise offen liegenden, durchgehenden Schicht (50) aus einer **anderen** Kunststoffschmelze (5) auf dem Wege der Coextrusion der Kunststoffschmelzen (4) und (5) unter Verwendung eines Extrusionswerkzeugs nach einem oder mehreren der Ansprüche 1 bis 6 und anschließender Kalibrierung des erhaltenen Extrudats.

8. Verfahren nach Anspruch 7, **dadurch gekennzeichnet, daß** eine Stegplatte mit einem oberen (100), einem unteren Gurt (102), gegebenenfalls Zwischengurten (101) und zwischen den Gurten befindlichen, senkrecht oder schräg angeordneten Stegen (103), insbesondere eine Stegdoppelplatte, eine Stegmehrfachplatte oder eine Fachwerkplatte, hergestellt wird.

9. Hohlkammerprofilplatte, herstellbar nach einem Verfahren gemäß Anspruch 7 oder 8, **dadurch gekennzeichnet, daß** sie aus thermoplastischem Kunststoff mit einem Schichtaufbau aus einer oben und unten befindlichen Schicht (40) aus einer Kunststoffschmelze (4) und einer im Innern des Hohlkammerprofils einseitig oben oder unten, zumindest teilweise offen liegenden, durchgehenden Schicht (50) aus einer anderen Kunststoffschmelze (5) besteht, **dadurch gekennzeichnet, daß** die durchgehende Schicht aus einem thermoplastischen Kunststoff besteht, der ein anorganisches und/oder ein organisches Pigment, einen Farbstoff, ein Perlglanzpigment und/oder ein Schlagzähmodifizierungsmittel und/oder Lichtstreuperlen und/oder ein Lichtstreumittel enthält.

10. Hohlkammerprofilplatte nach Anspruch 9, **dadurch gekennzeichnet, daß** es sich um eine Stegplatte mit einem oberen und einem unteren Gurt und dazwischenliegenden Stegen, insbesondere um eine Stegdoppelplatte, eine Stegmehrfachplatte oder einer Fachwerkplatte handelt.

11. Hohlkammerprofilplatte nach Anspruch 9 oder 10, **dadurch gekennzeichnet, daß** die Gurte und die dazwischenliegenden Stege im wesentlichen aus dem Kunststoff der Kunststoffschmelze (4) bestehen, und eine auf den Stegen aufsitzende, durchgehende Gurtinnenschicht aus dem Kunststoff der Kunststoffschmelze (5) vorhanden ist.

12. Hohlkammerprofilplatte nach Anspruch 11, **dadurch gekennzeichnet, daß** die Gurte eine Stärke von 0,5 bis 4 mm aufweisen und die durchgehende Gurtinnenschicht eine Stärke von 10 bis 250 μm aufweist und die Gesamtstärke der Stegplatte zwischen 8 und 40 mm beträgt.

13. Hohlkammerprofilplatte nach Anspruch 12, **dadurch gekennzeichnet, daß** sie ein IR-reflektierendes Perlglanzpigment enthält.

14. Hohlkammerprofilplatte nach einem oder mehreren der Ansprüche 9 bis 13, **dadurch gekennzeichnet, daß** sie aus einem Polymethylmethacrylat-Kunststoff besteht.

15. Verwendung einer Hohlkammerprofilplatte nach einem oder mehreren der Ansprüche 9 bis 14 als Bedachungs- oder Fassadenelemente.


**Claims**

1. Extrusion tool for extruding profiled cellular sheets of thermoplastic plastics with a layered structure consisting of a layer (40) of a molten plastic (4) at top and bottom and a continuous layer (5) of a different molten plastic (5) provided on one side, at the top or bottom, inside the cellular profile and at least partly open, formed by coextrusion,
   wherein the extrusion tool comprises a distributor tool (1), a profiled nozzle (9) and at least three melt flow channels (2a, 2b, 3), wherein the molten plastic (4) is associated with the melt flow channels (2a) and (2b) and the molten plastic (5) is associated with the melt flow channel (3),
   wherein the melt flow channel (2a) circumvents the melt flow channel (2b) or the distributor tool (1) by means of a branch (20a) and rejoins it after the branch,
   the molten plastic (5) is placed on top of the molten plastic (4), in front of or in the region of the branch (20a), as a result of the melt flow channel (3) opening into the melt flow channel (2b), and the distribution of the molten plastic (5) placed on top can be regulated by means of the distributor tool (1),
   the melt flow channel (2b) with the molten plastic (4) and the molten plastic (5) placed thereon is then recombined with the melt flow channel (2a) in the. profiled nozzle (9), the molten plastic (4) from the melt flow channel (2a) being placed on top of the molten plastic (5) from the melt flow channel (2b), so that the molten plastic (5) is located between two layers of melt (4) and the combined molten plastics are shaped to form a profiled cellular sheet as they emerge from the profiled nozzle (9).

2. Extrusion tool according to claim 1, **characterised in that** the melt flow channel (2b) is arranged between the melt flow channels (3) and (2a), the melt flow channel (3) opens into the melt flow channel (2b) in front of the branch (20a), the molten plastic (5) being placed on top of the molten plastic (4) and at this point the distribution of the molten plastic (5) placed on top can be carried out by means of the distributor tool (1) which also opens into the channel at this point, the melt flow channel (2a) circumvents the melt flow channel (2b) by means of the branch (20a), the melt flow channel (2b) with the molten plastic (5) and the molten plastic (4) placed thereon are passed through the branch (20a) and subsequently the melt flow channels (2a) and (2b) are combined in the profiled nozzle (9), so that the molten plastic (4) from the melt flow channel (2a) is combined with the molten plastic (5) from the melt flow channel (2b).

3. Extrusion tool according to claim 1, **characterised in that** the melt flow channel (3) is arranged between the melt flow channels (2b) and (2a), the melt flow channel (3) opens into the melt flow channel (2b) in the region of the branch (20a), the molten plastic (5) being placed on top of the molten plastic (4) and at this point the distribution of the molten plastic (5) put on top can be carried out by means of the distributor tool (1) which also opens into the channel at this point, the melt flow channel (2a) circumvents the distributor tool (1) by means of the branch (20a), the melt flow channel (2b) with the molten plastic (4) and the molten plastic (5) put on top and the melt flow channels with the melt (4) are combined in the profiled nozzle (9), so that the molten plastic (4) from the melt flow channel (2a) is combined with the molten plastic (5) from the melt flow channel (2b).

4. Extrusion tool according to one or more of claims 1 to 3, **characterised in that** the distributor tool (1) is a preferably multi-sectional adjustable slide adaptor or a blade adaptor.

5. Extrusion tool according to one or more of claims 1 to 4, **characterised in that** the profiled nozzle (9) comprises, in the exit region, the counter-profile to a cellular sheet with an upper band (100), a lower band (102), optionally intermediate bands (101) and webs (103) arranged perpendicularly or diagonally between the bands, particularly the counter-profile to a double cellular sheet, a multiple cellular sheet or a compartmental cellular sheet.

6. Extrusion tool according to one or more of claims 1 to 5, **characterised in that** the extrusion tool is multi-sectional and the section in which the melt flow channel (2a) circumvents the melt flow channel (2b) or the distributor tool (1) by means of a branch (20a) and rejoins it after the branch is located in a single- or multi-sectional exchangeable adaptor (7).

7. Process for producing multi-layer profiles cellular sheets of thermoplastic plastics having a layered structure comprising a layer (40) of a molten plastic (4) located at the top and bottom and a continuous layer (50) of a different molten plastic (5) provided on one side, at the top or bottom, inside the cellular sheet, which is at least partially open, by coextrusion of the molten plastics (4 and 5) using an extrusion tool according to one or more of claims 1 to 6 and subsequent calibration of the extruded material thus obtained.

8. Process according to claim 7, **characterised in that** a cellular sheet is produced having an upper band (100), a lower band (102), optionally intermediate bands (101) and webs (103) arranged perpendicularly or diagonally between the bands, particularly a double cellular sheet, a multiple cellular sheet or a compartmental sheet.

9. Profiled cellular sheet which may be produced by a process according to claim 7 or 8, **characterised in that** it consists of thermoplastic plastics having a layered structure comprising a layer (40) of a molten plastic (4) located at the top and bottom and a continuous layer (50) of a different molten plastic (5) provided on one side, at the top or bottom, inside the cellular sheet, which is at least partially open, **characterised in that** the continuous layer consists of a thermoplastic plastics which contains an inorganic and/or organic pigment, a dye, an opalescent pigment and/or an impact-resistant modifier and/or light refracting beads and/or a light refracting agent.

10. Profiled cellular sheet according to claim 9, **characterised in that** it is a cellular sheet having an upper and a lower band and webs between them, particularly a double cellular sheet, a multiple cellular sheet or a compartmental sheet.

11. Profiled cellular sheet according to claim 9 or 10, **characterised in that** the bands and the webs between them consist essentially of the plastics of the molten plastics (4), and an inner band layer of the plastics of the molten plastics (5) is provided, resting on the webs.

12. Profiled cellular sheet according to claim 11, **char-**

**acterised in that** the bands are 0.5 to 4 mm thick and the continuous inner band layer has a thickness of 10 to 250 $\mu$m and the total thickness of the cellular sheet is between 8 and 40 mm.

13. Profiled cellular sheet according to claim 12, **characterised in that** it contains an IR-reflecting opalescent pigment.

14. Profiled cellular sheet according to one or more of claims 9 to 13, **characterised in that** it consists of a polymethyl methacrylate plastics.

15. Use of a profiled cellular sheet according to one or more of claims 9 to 14 as a roofing or cladding element.

## Revendications

1. Outil d'extrusion pour l'extrusion de plaques de profilés à chambre creuse en matériau synthétique thermoplastique avec une stratification faite d'une couche supérieure et d'une couche inférieure (40) à partir d'une masse fondue de matière synthétique (4), et d'une couche continue (50), située à l'intérieur du profilé à chambre creuse d'un seul côté dessus ou dessous, au moins en partie ouverte, et constituée d'une autre matière synthétique fondue (5) par voie de coextrusion,
dans lequel
l'outil d'extrusion présent un outil de répartition (1), une buse à profilé (9) et au moins trois canaux de courants de masse fondue (2a, 2b, 3), pour lesquels la masse fondue de matière synthétique (4) est répartie dans les canaux de courants de masse fondue (2a) et (2b) et l'autre masse fondue de matière synthétique (5) est conduite dans l'autre canal de courant de masse fondue (3),
le canal de courant de masse fondue (2a) contourne le canal de courant de masse fondue (2b) ou l'outil de répartition (1) au moyen d'un embranchement (20a) et est à nouveau rassemblé après l'embranchement, avant ou dans la zone de l'embranchement (20a) par le débouché de l'autre canal de courant de masse fondue (3) dans le canal de courant de masse fondue (2b), l'autre masse fondue de matière synthétique (5) est versée sur la masse fondue de matière synthétique (4) et la répartition de l'autre masse fondue de matière synthétique (5) versée peut être régulée au moyen de l'outil de répartition (1),
le canal de courant de masse fondue (2b) est réuni ensuite avec la masse fondue de matière synthétique (4) et l'autre masse fondue de matière synthétique versée (5) dans la buse à profilé (9) avec le canal de courant de masse fondue (2a), la masse fondue de matière synthétique (4) provenant du canal de courant de masse fondue (2a) est versée sur l'autre masse fondue de matière synthétique (5) provenant du canal de courant de masse fondue (2b), si bien que celui-ci se trouve entre deux couches de masse fondue (4) et que les masses fondues de matière synthétique réunies sont formées au cours de la sortie de la buse à profilé (9) en une plaque de profilé à chambre creuse.

2. Outil d'extrusion selon la revendication 1,
   **caractérisé en ce que**
   le canal de courant de masse fondue (2b) est disposé entre les canaux de courant de masse fondue (3 et 2a), l'autre canal de courant de niasse fondue (3) débouche avant l'embranchement (20a) dans le canal de courant de masse fondue (2b), l'autre masse fondue de matière synthétique (5) étant versée sur la masse fondue de matière synthétique (4) et à cet endroit la répartition de l'autre masse fondue de matière synthétique (5) versée pouvant se faire au moyen de l'outil de répartition (1) débouchant également en cet endroit, le canal de courant de masse fondue (2a) contourne le canal de courant de masse fondue (2b) au moyen de l'embranchement (20a), le canal de courant de masse fondue (2b) est conduit avec l'autre masse fondue de matière synthétique (5) et la masse fondue de matière synthétique (4) versée à travers l'embranchement (20a), puis **en ce que** les canaux de courants de masse fondue (2a) et (2b) sont rassemblés dans la buse à profilé (9), si bien que la masse fondue de matière synthétique (4) provenant du canal de courant de masse fondue (2a) est rassemblée sur l'autre masse fondue de matière synthétique (5) provenant du canal de courant de masse fondue (2b).

3. Outil d'extrusion selon la revendication 1,
   **caractérisé en ce que**
   l'aure canal de courant de masse fondue (3) est disposé entre les canaux de courant de masse fondue (2b) et (2a), l'autre canal de courant de masse fondue (3) débouche dans la zone de l'embranchement (20a) dans le canal de courant de masse fondue (2b), l'autre masse fondue de matière synthétique (5) est versée sur la masse fondue de matière synthétique (4) et à cet endroit la répartition de l'autre masse fondue de matière synthétique versée (5) peut se faire au moyen de l'outil de répartition (1) débouchant également à cet endroit, le canal de courant de masse fondue (2a) contourne l'outil de répartition (1) au moyen de l'embranchement (20a), le canal de courant de masse fondue (2b) est rassemblé avec la masse fondue de matière synthétique (4) et l'autre masse fondue de matière synthétique versée (5) et les canaux de courant de masse fondue avec la masse fondue (4) dans la buse à profilé (9), si bien que la masse fondue de matière synthétique (4) provenant du canal de courant de masse fondue (2a) est conduite sur l'autre masse fondue de matière synthétique (5) provenant du canal de courant de masse fondue (2b).

4. Outil d'extrusion selon une ou plusieurs des revendications 1 à 3,
   **caractérisé en ce qu'**
   il s'agit, pour ce qui est de l'outil de répartition (1), d'un adaptateur coulissant réglable, de préférence en plusieurs parties, ou d'un adaptateur à lamelles.

5. Outil d'extrusion selon une ou plusieurs des revendications 1 à 4,
   **caractérisé en ce que**
   la buse à profilé (9) présente dans la zone de sortie le contre-profilé à une plaque à nervures avec une ceinture supérieure (100), une ceinture inférieure (102), le cas échéant des ceintures intermédiaires (101) et, se trouvant entre les ceintures, des nervures disposées perpendiculairement ou en oblique (103), en particulier le contre-profilé d'une plaque double à nervures, d'une plaque multiple à nervures ou d'une plaque à cloisonnage.

6. Outil d'extrusion selon une ou plusieurs des revendications 1 à 5,
   **caractérisé en ce que**
   l'outil d'extrusion est en plusieurs pièces et
   **en ce que**
   la section dans laquelle le canal de courant de masse fondue (2a) contourne le canal de courant de masse fondue (2b) ou l'outil de répartition (1) au moyen d'un embranchement (20a) et rassemblée à nouveau après l'embranchement se trouve dans un adaptateur en plusieurs pièces amovible (7).

7. Procédé de fabrication de plaques de profilés à chambre creuse à plusieurs couches faites d'une matière synthétique thermoplastique avec une constitution de couches faite d'une couche qui se trouve au-dessus et en dessous (40), faite d'une masse fondue de matière synthétique (4) et d'une couche continue (50) se trouvant à l'intérieur du profilé à chambre creuse d'un seul côté dessus ou dessous, au moins en partie ouverte, et constituée d'une autre masse fondue de matière synthétique (5) au moyen de la coextrusion des masses fondues de matière synthétique (4) et (5) avec utilisation d'un outil d'extrusion selon une ou plusieurs des revendications 1 à 6, puis du calibrage du produit d'extrusion obtenu.

8. Procédé selon la revendication 7,
   **caractérisé en ce qu'**
   on fabrique une plaque à nervures avec une ceinture supérieure (100), une ceinture inférieure (102), le cas échéant des ceintures intermédiaires (101) et des nervures (103) se trouvant entre les ceintures, disposées de façon perpendiculaire ou oblique, en particulier une plaque double à nervures, une plaque multiple à nervures ou une plaque à cloisonnage.

9. Plaque de profilé à chambre creuse, que l'on peut fabriquer en suivant un procédé selon la revendication 7 ou 8,
   **caractérisée en ce qu'**
   elle se compose de matière synthétique thermoplastique avec une constitution de couches faite d'une couche se trouvant au dessus et en dessous (40), faite d'une masse fondue de matière synthétique (4) et d'une couche continue (50) se situant à l'intérieur du profilé pour chambre creuse d'un seul côté dessus ou dessous, au moins en partie ouverte, et constituée d'une autre masse fondue de matière synthétique (5),
   **caractérisée en ce que**
   la couche continue se compose d'une matière synthétique thermoplastique qui contient un pigment inorganique et/ou un pigment organique, un colorant, un pigment nacré et/ou un modificateur de résilience et/ou des perles de dispersion de la lumière et/ou un agent dispersant de la lumière.

10. Plaque de profilé à chambre creuse selon la revendication 9,
    **caractérisée en ce qu'**
    il s'agit d'une plaque à nervures avec une ceinture supérieure et une ceinture inférieure et des nervures intermédiaires, en particulier d'une plaque double à nervures, d'une plaque multiple à nervures ou d'une plaque à cloisonnage.

11. Plaque de profilé à chambre creuse selon la revendication 9 ou 10,
    **caractérisée en ce que**
    les ceintures et les nervures intermédiaires se composent essentiellement de la matière synthétique de la masse fondue de matière synthétique (4), et d'une couche interne de ceinture continue se trouvant sur les nervures, et constituée de la matière synthétique de l'autre masse fondue de matière synthétique (5).

12. Plaque de profilé à chambre creuse selon la revendication 11,
    **caractérisée en ce que**
    les ceintures présentent une épaisseur de 0,5 à 4 mm et
    **en ce que**
    la couche interne de ceinture continue présente une épaisseur de 10 à 250 μm, et
    l'épaisseur totale de la plaque à nervures est comprise entre 8 et 40 mm.

13. Plaque de profilé à chambre creuse selon la revendication 12,
    **caractérisée en ce qu'**
    elle contient un pigment nacré reflétant l'infrarouge.

14. Plaque de profilé à chambre creuse selon une ou plusieurs des revendications 9 à 13,
    **caractérisée en ce qu'**
    elle se compose d'une matière synthétique de polyméthacrylate de méthyle.

15. Utilisation d'une plaque de profilé à chambre creuse selon une ou plusieurs des revendications 9 à 14, comme élément de toiture ou de façade.

Fig. 1

Fig. 2a)

Fig. 2b)

Fig. 3a)

Fig. 3b)